# EUROPÄISCHE PATENTANMELDUNG

(11) **EP 3 357 719 A1**
(43) Veröffentlichungstag der Anmeldung: **08.08.2018**
(21) Anmeldenummer: 18155230.8
(22) Anmeldetag: 06.02.2018
(51) Int. Cl.: B60G 17/015, B60G 13/14, B60W 10/22, B60W 10/26, B60W 30/02, B60K 7/00, B60L 11/00, B60W 20/00

(54) **AKTIVE RADAUFHÄNGUNG FÜR EIN FAHRZEUG**

(30) Priorität: 06.02.2017 LU 100066
(71) Anmelder: Ovalo GmbH, 65555 Limburg (DE)
(72) Erfinder:
(74) Vertreter: Grabovac, Dalibor

(57) **Zusammenfassung**

Die Erfindung betrifft eine aktive Radaufhängung für ein Fahrzeug, die eine aktive Wank- und/oder Nickstabilisierungsfunktion beinhaltet und die einen elektrisch angetriebenen Aktuator aufweist, mittels dem der Höhenstand eines an die Radaufhängung angekoppelten Rades für eine Wank- und/oder Nickstabilisierung einstellbar ist. Die Radaufhängung beinhaltet eine Elektronikeinheit, die den Aktuator derart steuert, dass der Aktuator zusätzlich als elektromechanischer Dämpfer fungiert, der Schwingungen des Rades relativ zu einer Fahrzeugkarosserie dämpft, und/oder derart steuert, dass der Aktuator zusätzlich als elektromechanisches Federelement fungiert, das bei im Fahrbetrieb auftretenden Stößen eine elastisch nachgebende Bewegung des Rades zulässt.

## Beschreibung

Die Erfindung betrifft eine aktive Radaufhängung für ein Fahrzeug, die eine aktive Wank- und/oder Nickstabilisierungsfunktion beinhaltet und die einen elektrisch angetriebenen Aktuator aufweist, mittels dem der Höhenstand eines an die Radaufhängung angekoppelten Rades für eine Wank- und/oder Nickstabilisierung einstellbar ist.

Die Erfindung betrifft außerdem ein Fahrwerk, das eine solche Radaufhängung beinhaltet sowie ein Fahrzeug mit einer solchen Radaufhängung.

Die Radaufhängung eines Fahrzeugs ist zumeist dazu ausgebildet, im Fahrbetrieb auftretenden Stößen, die beispielsweise durch Fahrbahnunebenheiten hervorgerufen werden könne, durch eine elastisch nachgebende Bewegung des Rades nachzugeben und dazu ein Schwingen des Rades relativ zu einer Fahrzeugkarosserie zu dämpfen. Zu diesem Zweck sind zumeist wenigsten seine mechanische Feder, die oftmals als Schraubenfeder ausgeführt ist, und ein Dämpfer, der oftmals hydraulischer Dämpfer ausgeführt ist, vorhanden.

Außerdem gibt es Fahrwerke mit aktiven Radaufhängungen, die zur Verbesserung des Seitneigungs- und Wankverhaltens bei Kurvenfahrten und/oder zum Vermeiden oder Reduzieren von Nickbewegungen beim Anfahren oder Bremsen ausgebildet sind.

Aus DE 10 2005 031 036 A1 ist beispielsweise ein Schwenkmotor zur Wankregelung durch gegeneinander Verdrehen von zwei Kraftfahrzeugstabilisatoren bekannt. Der Schwenkmotor besteht mindestens aus einem Verstellantrieb mit einem Elektromotor, einem Schwenkmotorgetriebe und einem Gehäuse. Der Schwenkmotor ist zwischen den Kraftfahrzeugstabilisatoren, die auch als Hälften eines Gesamtstabilisators angesehen werden können, angeordnet und dazu bestimmt, aufgrund einer geeigneten Ansteuerung, diese Stabilisatorhälften bedarfsgerecht gegeneinander zu verdrehen.

Aus DE 10 2006 040 109 A1 ist ein aktiver, geteilter Kraftfahrzeugstabilisator mit eingebautem Schwenkmotor bekannt. Der Kraftfahrzeugstabilisator dient zur Wankregelung und weist einen Verstellantrieb aus Motor und Getriebe und aus einem Gehäuse auf. An einem Gehäuseteilen ist ein Sensor zur Erfassung des Torsionwinkels des Stabilisatorteils angebracht, dessen Geber am Stabilisatorteil fixiert ist oder umgekehrt.

Aus DE 10 2008 048 950 A1 ist ein druckmittelbetätigbarer Schwenkmotor für ein Fahrzeug bekannt, der in einem geteilten Stabilisator angeordnet ist und mit dem die beiden Stabilisatorhälften zum Ausgleich von Fahrzeugbewegungen zueinander schwenkbar sind. Der Schwenkmotor weist einen in einem Gehäuse axial verschiebbaren Kolben und beidseitig zum Kolben angeordnete Arbeitsräume auf. Durch Druckmittelbeaufschlagung der Arbeitsräume in Verbindung mit einem oder mehreren Koppelelementen ist ein Drehmoment zwischen den Stabilisatorhälften erzeugbar. Zwischen den Arbeitsräumen besteht eine Verbindung, die mittels eines Ventils in Abhängigkeit von dem Fahrzustand des Fahrzeugs schließbar oder freigebbar ist.

Aus DE 10 2009 013 053 A1 ist ein Stabilisator für ein Fahrwerk eines Kraftfahrzeuges mit zumindest zwei Stabilisatorelementen bekannt, welche mittels zumindest eines elektromotorischen Aktuators zur Wankregelung verdrehbar sind und welche jeweils über zumindest eine Koppelstange mit dem Fahrwerk verbunden sind. Der Stabilisator ist mittels zumindest einer hydraulischen Freischalteinrichtung entkoppelbar.

Aus EP 2 011 674 A1 ist eine Stabilisatoranordnung, umfassend einen zweigeteilten Stabilisator, dessen Stabilisatorabschnitte eine rotatorische Relativbewegung zueinander ausführen und bei einer gegensinnigen Verdrehbelastung eine Rückstellkraft ausüben, bekannt. Die Rückstellkraft ist mittels eines Aktuators in Verbindung mit einem Getriebe einstellbar, wobei die Stabilisatoranordnung unabhängig von einer Torsionsfederwirkung der Stabilisatorabschnitte mindestens eine weitere Feder aufweist, die eine Torsionsfederwirkung bewirkt.

Eine ähnliche Vorrichtung ist aus DE 10 2009 006 385 A1 bekannt. Konkret offenbart diese Druckschrift einen Schwenkmotor für einen aktiven Wankstabilisator, der mit seinem Antrieb an eine Stabilisatorhälfte und der statorseitig an eine andere Stabilisatorhälfte eines geteilten Stabilisators angeschlossen werden kann.

Außer dem vorgenannten Typ von Stabilisatorsystemen gibt es auch solche Systeme, bei denen jeweils ein aktiver Einzelstabilisator ausschließlich einem Rad zugeordnet ist. Ein solches System hat den Vorteil, dass die Räder einer Achse mit gleichgerichteten Kräften beaufschlagt werden könne, um beispielsweise einer Nickbewegung beim Anfahren und/oder Bremsen entgegenwirken zu können. Ein solches System ist beispielsweise aus DE 10 2010 037 180 A1 oder aus DE 10 2010 037 555 A1 bekannt.

Aus DE 10 2009 014 201 A1 ist ein aktives elektromechanisches Federungssystem für ein Fahrwerk eines Kraftfahrzeuges mit einer ersten und einer zweiten Achse für jeweils zwei sich gegenüberliegende Räder bekannt. Der ersten Achse sind jeweils für die gegenüberliegenden Räder Federbeine mit Federbeinaktuatoren zugeordnet. Der zweiten Achse sind jeweils für die gegenüberliegenden Räder Federanordnungen mit Rotationsaktuatoren zugeordnet.

Es ist daher die Aufgabe der vorliegenden Erfindung, eine besonders platzsparende Radaufhängung anzugeben.

Die Aufgabe wird durch eine aktive Radaufhängung gelöst, die gekennzeichnet ist durch eine Elektronikeinheit, die den Aktuator derart steuert, dass der Aktuator zusätzlich als elektromechanischer Dämpfer fungiert, der Schwingungen des Rades relativ zu einer Fahrzeugkarosserie dämpft, und/oder dass der Aktuator zusätzlich als elektromechanisches Federelement fungiert, das bei im Fahrbetrieb auftretenden Stößen eine elastisch nachgebende Bewegung des Rades zulässt.

Die Erfindung hat den ganz besonderen Vorteil, dass Funktionalitäten typischer Bauelemente, wie z.B. hydraulische Stoßdämpfer und/oder großvolumige Federelemente in einem Aktuator, insbesondere modulartig, zusammengefasst werden können. Neben dem weiteren, weiter unten im Detail genannten Vorteil, fahrsituationsabhängig oder fahrbahnabhängig flexibel unterschiedliche Federungs- und/oder Dämpfungsmodi einzustellen zu können, hat die Erfindung insbesondere den Vorteil, dass Bauraum eingespart wird, weil insgesamt weniger Bauteile benötigt werden.

Dies wird dadurch erreicht, dass der Aktuator zusätzlich (und vorzugsweise insbesondere auch gleichzeitig) zu seiner Funktion für eine Wank- und/oder Nickstabilisierung derart aktiv angesteuert wird, dass er zusätzlich (und vorzugsweise insbesondere auch gleichzeitig) eine Federfunktion und/oder eine Dämpferfunktion wahrnimmt. Insbesondere kann vorteilhaft vorgesehen sein, dass den Ansteuersignalen für eine Wank- und/oder Nickstabilisierung zusätzlich Ansteuersignale für die Federfunktion und/oder die Dämpferfunktion überlagert werden.

Hinsichtlich der Federfunktion hat die Erfindung den ganz besonderen Vorteil, dass die Federkonstante fahrtsituationsabhängig und/oder fahrbahnabhängig ohne wesentliche Zeitverzögerung verändert werden kann. Gleiches gilt analog für die Dämpferfunktion.

Ein ganz wesentlicher Vorteil der vorliegenden Erfindung liegt darin, dass die Radaufhängung ohne zusätzliche, viel Bauraum beanspruchende, hydraulische Stoßdämpfer und/oder Schraubenfedern auskommt, so dass der nicht mehr zur Integration solcher Bauelemente benötigte Bauraum in das Kraftfahrzeug beispielsweise zur Vergrößerung des Ladevolumens des Fahrzeugs oder für andere Aggregate zur Verfügung stehen kann.

Insoweit kann vorteilhaft vorgesehen sein, dass die aktive Radaufhängung außer dem Aktuator keinen weiteren Dämpfer, insbesondere keinen hydraulischen Stoßdämpfer oder Reibungsdämpfer oder Luftfederdämpfer, aufweist, der ein Schwingen des Rades relativ zu einer Fahrzeugkarosserie dämpft. Es ist jedoch nicht grundsätzlich ausgeschlossen, dass die aktive Radaufhängung außer dem Aktuator wenigstens ein weiteres Dämpferelement aufweist. Insbesondere kann ein solcher zusätzlicher Dämpfer kleiner und damit platzsparender ausgebildet sein, als bei einer herkömmlichen Radaufhängung.

Analog kann - alternativ oder zusätzlich - vorteilhaft vorgesehen sein, dass die aktive Radaufhängung außer dem Aktuator kein weiteres Federelement aufweist, das bei im Fahrbetrieb auftretenden Stößen eine elastisch nachgebende Bewegung des Rades zulässt.

Es ist jedoch nicht grundsätzlich ausgeschlossen, dass die aktive Radaufhängung außer dem Aktuator wenigstens ein weiteres Federelement aufweist.

Bei einer besonderen Ausführung weist die erfindungsgemäße, aktive Radaufhängung außer dem Aktuator wenigstens ein weiteres Federelement auf, das bei im Fahrbetrieb auftretenden Stößen eine elastisch nachgebende Bewegung des Rades zulässt. Das zusätzliche, weitere Federelement kann insbesondere dazu dienen, ein vorgegebenes oder vorgebbares Grundgewicht einer Fahrzeugkarosserie abzustützen, so dass der Aktuator zur Abstützung dieses Grundgewichts nicht aktiv bestromt werden muss. Auf diese Weise kann Energie eingespart werden. Hierbei kann vorteilhaft insbesondere vorgesehen sein, dass der Aktuator hinsichtlich seiner Federfunktion so gesteuert wird, dass er das Gewicht der Zuladung im Fahrbetrieb federnd abstützt.

Das weitere Federelement kann relativ zu dem Aktuator wirktechnisch in Reihe geschaltet sein. Alternativ ist es auch möglich, dass das weitere Federelement zu dem Aktuator wirktechnisch parallelgeschaltet ist.

Es ist auch möglich, dass mehrere weitere Federelemente vorhanden sind. Beispielsweise kann vorteilhaft vorgesehen sein, dass ein weiteres Federelement mit dem Aktuator wirktechnisch in Reihe geschaltet ist, während ein anderes weiteres Federelement zu dem Aktuator wirktechnisch parallel geschaltet ist.

Bei einer besonderen Ausführung gibt es zwei weitere Federelemente, wobei ein Federelement als Torsionsstab oder Torsionsrohr ausgebildet ist, das dem Aktuator triebtechnisch nachgeschaltet, also mit dem Aktuator wirktechnisch in Reihe geschaltet, ist, während das andere weitere Federelement beispielsweise als Schraubenfeder oder als Schenkelfeder ausgeführt ist, die zu dem Aktuator wirktechnisch parallelgeschaltet ist.

Das weitere Federelement kann insbesondere eine mechanische Feder sein. Insbesondre kann vorteilhaft vorgesehen sein, dass das weitere Federelement eine Torsionsfeder oder ein Torsionsfederrohr oder eine Torsionsfederstange aufweist. Es ist auch möglich, dass das weitere Federelement eine Schraubenfeder oder eine Spiralfeder aufweist. Bei einer besonders platzsparenden Ausführung ist das weitere Federelement als Schenkelelement ausgeführt.

Bei einer besonderen Ausführung erzeugt der Aktuator im Rahmen seiner Dämpferfunktion elektrischen Strom. Hierbei fungiert ein elektrischer Antriebsmotor des Aktuators als Generator. Allerdings ist es in der Praxis so, dass der Aktuator zumeist mit elektrischen Strom versorgt werden muss, da der Energiebedarf für die Wank- und/oder Nickstabilisierung und/oder die Federfunktion in aller Regel größer ist, als der mögliche Energierückgewinn durch die Dämpferfunktion. Im Ergebnis kann der Aktuator jedoch vorteilhaft derart ausgebildet sein, dass durch eine zusätzliche Dämpferfunktion der Nettoenergiebedarf gegenüber einem Aktuator ohne Dämpferfunktion verringert ist.

Bei einer ganz besonders vorteilhaften Ausführung ist wenigstens eine Dämpfereigenschaft des als Dämpfer fungierenden Aktuators einstellbar. Alternativ oder zusätzlich kann vorteilhaft vorgesehen sein, dass insbesondere automatisch und/oder fahrsituationsabhängig, ein Dämpfer-Steuerungsmodus aus wenigstens zwei in der Elektronikeinheit abgespeicherten Dämpfer-Steuerungsmodi, die sich durch wenigstens einen Dämpferparameter unterscheiden, auswählbar ist. Auf diese Weise kann das Dämpferverhalten, insbesondere automatisch, schnell an unterschiedliche Anforderungen, wie unterschiedliche Fahrweisen und/oder unterschiedliche Fahrbahnoberflächen und/oder unterschiedliche Fahrsituationen und/oder unterschiedliche Lastzustände, angepasst werden.

Analog kann - alternativ oder zusätzlich - vorteilhaft vorgesehen sein, dass wenigstens eine Federeigenschaft des als Federelement fungierenden Aktuators einstellbar ist. Insbesondere kann vorteilhaft vorgesehen sein, dass, insbesondere automatisch und/oder fahrsituationsabhängig, ein Feder-Steuerungsmodus aus wenigstens zwei in der Elektronikeinheit abgespeicherten Feder-Steuerungsmodi, die sich durch wenigstens einen Federparameter unterscheiden, auswählbar ist. Auf diese Weise kann das Federverhalten, insbesondere automatisch, schnell an unterschiedliche Anforderungen, wie unterschiedliche Fahrweisen und/oder unterschiedliche Fahrbahnoberflächen und/oder unterschiedliche Fahrsituationen und/oder unterschiedliche Lastzustände, angepasst werden.

Bei dem Federparameter kann es sich beispielsweise um eine Federkonstante handeln. Insbesondere kann vorteilhaft auch vorgesehen sein, dass die Radaufhängung von der Elektronikeinheit derart gesteuert wird, dass die Federkonstante in Abhängig von der Einfederstellung ansteigt oder abfällt. Auf diese Weise kann vorteilhaft - je nach Anforderung - ein progressives oder degressives Federverhalten eingestellt werden.

Bei einer vorteilhaften Ausführung ist wenigstens ein Sensor vorhanden, der ein Sensorsignal für die Elektronikeinheit erzeugt, das die Elektronikeinheit bei der Ansteuerung des Aktuators berücksichtigt. Bei dem Sensor kann es sich beispielsweise um einen Höhenstandsensor zum Ermitteln des Höhenstandes des Rades relativ zu einer Fahrzeugkarosserie handeln. Es ist auch möglich, dass der Sensor ein Drehmomentsensor ist, der das Drehmoment misst, das auf einem Bauteil des Aktuators oder auf ein dem Aktuator technisch nachgeschaltetes Übertragungsbauteil wirkt.

Ganz allgemein kann vorteilhaft vorgesehen sein, dass dem Aktuator ein Übertragungsbauteil triebtechnisch nachgeschaltet ist.

Insbesondere kann vorteilhaft vorgesehen sein, dass die Radaufhängung mehrere, unterschiedliche Sensoren, zum Messen unterschiedlicher Stell- und/oder Regelgrößen oder anderer Größen aufweist.

Von besonderem Vorteil ist ein Fahrwerk, das eine erfindungsgemäße aktive Radaufhängung beinhaltet. Ganz besonders vorteilhaft ist ein Fahrwerk für ein Kraftfahrzeug, das wenigstens vier, insbesondere unabhängig voneinander steuerbare, erfindungsgemäße Radaufhängungen beinhaltet.

Von ganz besonderem Vorteil ist außerdem ein Fahrzeug, das wenigstens eine erfindungsgemäße Radaufhängung und/oder ein Fahrwerk mit einer erfindungsgemäßen, aktiven Radaufhängung beinhaltet.

Wie oben bereits erläutert kann vorteilhaft vorgesehen sein, dass die erfindungsgemäße Radaufhängung außer dem Aktuator kein weiteres Federelement und/oder Dämpferelement aufweist. Insbesondere kann vorteilhaft vorgesehen sein, dass auch das Fahrwerk, das mit erfindungsgemäßen Radaufhängungen ausgerüstet ist, außer den Aktuatoren der erfindungsgemäßen Radaufhängungen keine zusätzlichen Dämpfer und/oder Federelement aufzuweisen braucht. Gleiches gilt analog für ein Fahrzeug, das mit erfindungsgemäßen Radaufhängungen ausgerüstet ist.

Bei dem Fahrzeug kann es sich vorteilhaft insbesondere um ein Elektrofahrzeug, insbesondere ein reines Elektrofahrzeug handeln. In vorteilhafter Weise kann vorgesehen sein, dass das Fahrzeug zum Bewirken eines Vortriebs wenigstens einen Elektromotor aufweist. Insoweit kann das Fahrzeug beispielsweise auch als Hybridfahrzeug ausgebildet sein. Es ist jedoch auch möglich, dass die Erfindung bei einem Fahrzeug verwirklicht ist, das zum Bewirken eines Vortriebs ausschließlich einen Verbrennungsmotor aufweist.

Die Erfindung hat den ganz besonderen Vorteil, dass Fahrzeuge mit einem, insbesondere elektrischen, Radnabenantrieb besser gedämpft werden können. Radnabenantriebe haben den besonderen Vorteil, dass sie direkt am Rad wirken und dass daher keine aufwendigen mechanischen Übertragungsbauteile zum Übertragen eines Drehmoments von einem Antriebsmotor zum Rad erforderlich sind. Allerdings haben Radnabenmotoren den Nachteil, dass durch sie der Anteil der ungefederten Massen erhöht ist. Gerade in Bezug hierauf ermöglicht die Erfindung eine besonders vorteilhafte Federung und/oder Dämpfung. Gerade bei einem Fahrzeug mit Radnabenmotoren ist es von besonderem Vorteil, mit den erfindungsgemäßen Radaufhängungen die Dämpfung und/oder die Federung fahrsituationsabhängig und/oder lastabhängig und/oder in Abhängigkeit von der Beschaffenheit der Fahrbahn schnell und flexibel einstellen zu können.

Ganz besonders vorteilhaft ist vor diesem Hintergrund ein, insbesondere reines, Elektrofahrzeug, das mit Radnabenmotoren ausgerüstet sind, die jeweils über eine erfindungsgemäße Radaufhängung an die Karosserie angebunden sind.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein erstes Ausführungsbeispiel einer erfindungsgemäßen, aktiven Radaufhängung, und
- Fig. 2: ein zweites Ausführungsbeispiel einer erfindungsgemäßen, aktiven Radaufhängung.

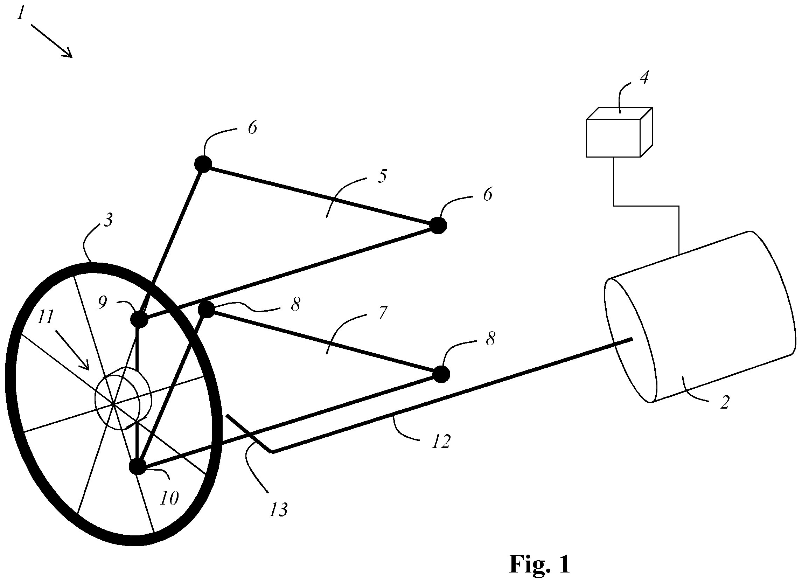

Figur 1 zeigt eine erfindungsgemäße, aktive Radaufhängung 1 für ein Fahrzeug, die einen elektrisch angetriebenen Aktuator 2 aufweist, mittels dem der Höhenstand eines der an die Radaufhängung angekoppelten Rades 3 für eine Wank- und/oder Nickstabilisierung einstellbar ist. Die aktive Radaufhängung 1 beinhaltet außerdem eine Elektronikeinheit 4, die den Aktuator 1 derart steuert, dass der Aktuator 1 zusätzlich als elektromechanischer Dämpfer fungiert, der Schwingungen des Rades 3 relativ zu einer Fahrzeugkarosserie dämpft und/oder derart steuert, dass der Aktuator 2 zusätzlich als elektromechanisches Federelement fungiert, das bei im Fahrbetrieb auftretenden Stößen eine elastisch nachgebende Bewegung des Rades 3 zulässt.

Die Radaufhängung 1 beinhaltet darüber hinaus einen oberen Lenker 5, der mittels Gelenkanbindungen 6 verschwenkbar an einer Fahrzeugkarosserie befestigbar ist. Die Radaufhängung beinhaltet darüber hinaus einen unteren Lenker 7, der mittels weiterer Gelenkanbindungen 8 ebenfalls verschwenkbar an einer Fahrzeugkarosserie anbringbar ist. Der obere Lenker 5 und der untere Lenker 7 sind jeweils gelenkig mittels eines oberen Gelenks 9 und eines unteren Gelenks 10 mit einem Radträger 11 verbunden, an dem das Rad 3 befestigt ist.

Dem Aktuator 2 ist triebtechnisch ein als Torsionsfeder ausgebildeter Drehstab 12 triebtechnisch nachgeschaltet. Der Drehstab 12 ist drehfest mit einem Hebel 13 verbunden, der seinerseits gelenkig an dem unteren Lenker 7 befestigt ist. Ein von dem Aktuator 2 erzeugtes Drehmoment wird über den Drehstab 12 zu dem Hebel 13 übertragen, der, je nach Drehrichtung, den unteren Lenker 7 und die damit verbundenen Bauteile, insbesondere das Rad 3, relativ zu der Karosserie nach oben oder unten bewegen kann.

Die in Figur 1 dargestellte aktive Radaufhängung weist keinen weiteren Dämpfer insbesondere keinen hydraulischen Stoßdämpfer oder Reibungsdämpfer oder Luftfederdämpfer auf, der ein Schwingen des Rades 3 relativ zu einer Fahrzeugkarosserie dämpft.

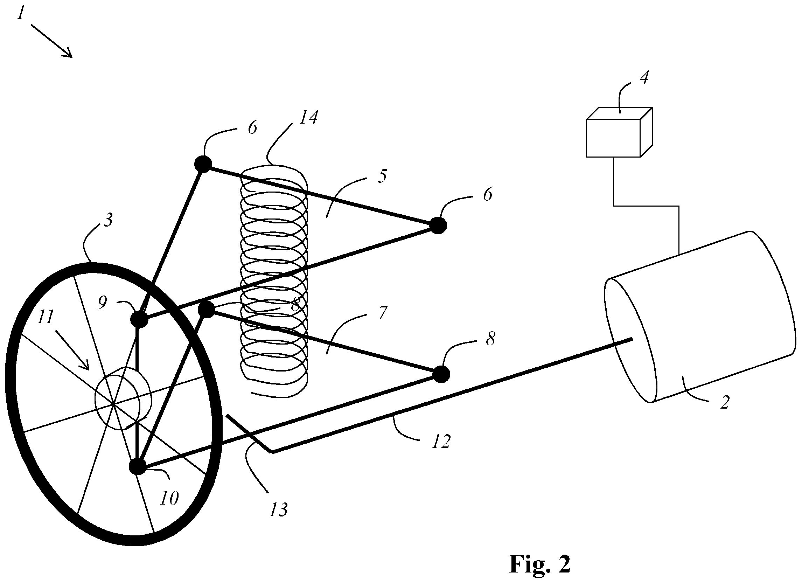

Bei der in Figur 2 dargestellten Ausführung einer erfindungsgemäßen aktiven Radaufhängung 1 ist dem als elektromechanisches Federelement fungierenden Aktuator 2 zusätzlich ein weiteres Federelement 14 in Form einer Schraubenfeder 15 parallel geschaltet. Die Schraubenfeder 15 stützt sich an ihrem unteren Ende auf dem unteren Lenker 7 und an ihrem oberen Ende gegen eine Fahrzeugkarosserie ab.

### Bezugszeichenliste:

- 1: Aktive Radaufhängung
- 2: Aktuator
- 3: Rad
- 4: Elektronikeinheit
- 5: Oberer Lenker
- 6: Gelenkanbindungen
- 7: Unterer Lenker
- 8: Weitere Gelenkanbindungen
- 9: Oberes Gelenk
- 10: Unteres Gelenk
- 11: Radträger
- 12: Drehstab
- 13: Hebel
- 14: Weiteres Federelement
- 15: Schraubenfeder

## Patentansprüche

1. Aktive Radaufhängung für ein Fahrzeug, die eine aktive Wank- und/oder Nickstabilisierungsfunktion beinhaltet und die einen elektrisch angetriebenen Aktuator aufweist, mittels dem der Höhenstand eines an die Radaufhängung angekoppelten Rades für eine Wank- und/oder Nickstabilisierung einstellbar ist, **gekennzeichnet durch** eine Elektronikeinheit, die den Aktuator derart steuert, dass der Aktuator zusätzlich als elektromechanischer Dämpfer fungiert, der Schwingungen des Rades relativ zu einer Fahrzeugkarosserie dämpft, und/oder dass der Aktuator zusätzlich als elektromechanisches Federelement fungiert, das bei im Fahrbetrieb auftretenden Stößen eine elastisch nachgebende Bewegung des Rades zulässt.

2. Aktive Radaufhängung nach Anspruch 1, **dadurch gekennzeichnet, dass** die aktive Radaufhängung außer dem Aktuator keinen weiteren Dämpfer, insbesondere keinen Stoßdämpfer oder hydraulischen Stoßdämpfer oder Reibungsstoßdämpfer oder Luftfederdämpfer, aufweist, der ein Schwingen des Rades relativ zu einer Fahrzeugkarosserie dämpft.

3. Aktive Radaufhängung nach Anspruch 1 oder 2, **dadurch gekennzeichnet, dass** die aktive Radaufhängung außer dem Aktuator kein weiteres Federelement aufweist, das bei im Fahrbetrieb auftretenden Stößen eine elastisch nachgebende Bewegung des Rades zulässt.

4. Aktive Radaufhängung nach Anspruch 1 oder 2, **dadurch gekennzeichnet, dass** die aktive Radaufhängung außer dem Aktuator wenigstens ein weiteres Federelement aufweist, das bei im Fahrbetrieb auftretenden Stößen eine elastisch nachgebende Bewegung des Rades zulässt.

5. Aktive Radaufhängung nach Anspruch 4, **dadurch gekennzeichnet, dass**
a. das weitere Federelement mit dem Aktuator wirktechnisch in Reihe geschaltet ist, oder dass
b. das weitere Federelement zu dem Aktuator wirktechnisch parallel geschaltet ist.

6. Aktive Radaufhängung nach Anspruch 4 oder 5, **dadurch gekennzeichnet, dass**
a. das weitere Federelement eine mechanische Feder ist, und/oder dass
b. das weitere Federelement eine Torsionsfeder oder ein Torsionsfederrohr oder eine Torsionsfederstange aufweist, und/oder dass
c. das weitere Federelement eine Schraubenfeder aufweist, und/oder dass
d. das weitere Federelement eine Schenkelfeder aufweist.

7. Aktive Radaufhängung nach einem der Ansprüche 1 bis 6, **dadurch gekennzeichnet, dass** der Aktuator, wenn er als Dämpfer fungiert, elektrischen Strom erzeugt.

8. Aktive Radaufhängung nach einem der Ansprüche 1 bis 7, **dadurch gekennzeichnet, dass** wenigstens eine Dämpfereigenschaft des als Dämpfer fungierenden Aktuators einstellbar ist und/oder dass, insbesondere automatisch und/oder fahrsituationsabhängig, ein Dämpfer-Steuerungsmodus aus wenigstens zwei in der Elektronikeinheit abgespeicherten Dämpfer-Steuerungsmodi, die sich durch wenigstens einen Dämpferparameter unterscheiden, auswählbar ist.

9. Aktive Radaufhängung nach einem der Ansprüche 1 bis 8, **dadurch gekennzeichnet, dass** wenigstens eine Federeigenschaft des als Federelement fungierenden Aktuators einstellbar ist und/oder dass, insbesondere automatisch und/oder fahrsituationsabhängig, ein Feder-Steuerungsmodus aus wenigstens zwei in der Elektronikeinheit abgespeicherten Feder-Steuerungsmodi, die sich durch wenigstens einen Federparameter unterscheiden, auswählbar ist.

10. Aktive Radaufhängung nach einem der Ansprüche 1 bis 9, **dadurch gekennzeichnet, dass**
a. der Aktuator einen elektrisch angetriebenen Antriebsmotor und ein dem Antriebsmotor triebtechnisch nachgeschaltetes Getriebe aufweist, oder dass
b. der Aktuator aus einem elektrisch angetriebenen Antriebsmotor und ein dem Antriebsmotor triebtechnisch nachgeschalteten Getriebe besteht.

11. Aktive Radaufhängung nach einem der Ansprüche 1 bis 10, **dadurch gekennzeichnet, dass**
a. wenigstens ein Sensor vorhanden ist, der ein Sensorsignal für die Elektronikeinheit erzeugt, das die Elektronikeinheit bei der Ansteuerung des Aktuators berücksichtigt, oder dass
b. wenigstens ein Sensor vorhanden ist, der ein Sensorsignal für die Elektronikeinheit erzeugt, das die Elektronikeinheit bei der Ansteuerung des Aktuators berücksichtigt, wobei der Sensor ein Höhenstandssensor zum Ermitteln des Höhenstandes des Rades relativ zu einer Fahrzeugkarosserie ist, oder dass
c. wenigstens ein Sensor vorhanden ist, der ein Sensorsignal für die Elektronikeinheit erzeugt, das die Elektronikeinheit bei der Ansteuerung des Aktuators berücksichtigt, wobei der Sensor ein Drehmomentsensor ist, der das Drehmoment misst, das auf ein Bauteil des Aktuator oder auf ein dem Aktuator triebtechnisch nachgeschaltetes Übertragungsbauteil misst.

12. Fahrwerk beinhaltend wenigstens eine aktive Radaufhängung nach einem der Ansprüche 1 bis 11.

13. Fahrwerk nach Anspruch 12, **dadurch gekennzeichnet, dass**
a. das Fahrwerk keinen weiteren Dämpfer, insbesondere keinen hydraulischen Stoßdämpfer oder Reibungsstoßdämpfer oder Luftfederdämpfer, aufweist, der ein Schwingen des Rades relativ zu einer Fahrzeugkarosserie dämpft, und/oder dass
b. das Fahrwerk kein weiteres Federelement aufweist, das das bei im Fahrbetrieb auftretenden Stößen eine elastisch nachgebende Bewegung des Rades zulässt.

14. Fahrzeug beinhaltend wenigstens eine aktive Radaufhängung nach einem der Ansprüche 1 bis 11 oder ein Fahrwerk nach Anspruch 12 oder 13.

15. Fahrzeug nach Anspruch 14, **dadurch gekennzeichnet, dass**
a. das Fahrzeug ein Elektrofahrzeug, insbesondere ein reines Elektrofahrzeug, ist und/oder dass
b. das Fahrzeug zum Bewirken eines Vortriebs wenigstens einen Elektromotor aufweist, und/oder dass
c. das Fahrzeug zum Bewirken eines Vortriebs wenigstens einen Radnabenmotor Elektromotor aufweist, der ein Radnabenmotor ist.
